# EUROPEAN PATENT SPECIFICATION

(11) **EP 1 015 121 B1**
(45) Date of publication and mention of the grant of the patent: **10.07.2002**
(21) Application number: 98907047.9
(22) Date of filing: 25.02.1998
(51) Int. Cl.: B03B 9/06, B03B 9/00

(54) **PROCESS AND APPARATUS FOR SEPARATING ECONOMIC MATERIALS FROM INERT WASTE**
VERFAHREN UND VORRICHTUNG ZUR ABTRENNUNG VON WERTSTOFFEN AUS INERTEN ABFÄLLEN
PROCEDE ET APPAREIL PERMETTANT DE SEPARER LES MATIERES A RECYCLAGE RENTABLE DES DECHETS INERTES

(30) Priority: 27.02.1997 GB 9704087
(43) Date of publication of application: 05.07.2000
(73) Proprietor: Finlay Plant (Southern) Limited, Seighford, Stafford ST18 9QL (GB); George, Michael Eric, Huntingdon, Cambridgeshire PE17 2BL (GB)
(72) Inventor: GEORGE, Michael, Eric, Huntingdon,Cambridgeshire PE17 2BL (GB); DUNNE, John, Seighford,Stafford ST18 9QL (GB)
(74) Representative: Molyneaux, Martyn William
(86) International application number: GB9800584
(87) International publication number: WO9837972

(56) References cited:
- R. NOACK: "Eine der ersten modernen Aufbereitungsanlagen in den neuen Bundesländern - das Kieswerk Starkenberg " AUFBEREITUNGS TECHNIK., vol. 32, no. 10, October 1991, WIESBADEN DE, pages 581-582, XP000235347
- "Aushubwaschanlage für Alternativ-und Recyclingbaustoffe" AUFBEREITUNGS TECHNIK., vol. 34, no. 11, November 1993, WIESBADEN DE, pages 602-603, XP000409184
- R. JONAS: "Demands of economy and ecology require modern washing and dewatering processes in gravel works" AUFBEREITUNGS TECHNIK., vol. 37, no. 8, August 1996, WIESBADEN DE, pages 373-380, XP000620122
- "GAR mit einer neuen Lösung für wirtschaftliche Entsorgung und Haldenaubereitung" AUFBEREITUNGS TECHNIK., vol. 31, no. 8, August 1990, WIESBADEN DE, page 458 XP000164766
- N. ZAMBELLI: "Planning and design of a new sand and gravel preparation plant in the area of Rinteln" AUFBEREITUNGS TECHNIK., vol. 29, no. 8, August 1988, WIESBADEN DE, pages 465-469, XP002067074

## Description

This invention relates to the reclamation of waste material and in particular to a process and apparatus for separating economic materials from inert waste.

Recycling of materials is becoming recognised as increasingly important, both in the husbanding of resources and in the protection of the environment. To encourage recycling and protect the environment, governments are increasingly regulating and taxing the disposal of waste, and encouraging the use of recycled materials.

In N. Zambelli: 'Planning and design of a new sand and gravel preparation plant in the area of Rinteln", AUFBEREITUNGS TECHNIK, vol. 29, No. 8, August 1988, WIESBADEN, pages 465-469, and R. Noack: "Eine der ersten modernen Aufbereitungsanlagen in den neuen Bundesländern - das Keiswerk Starkenberg", AUFBEREITUNGS TECHNIK, vol. 32, no. 10, October 1991, WIESBADEN, pages 581-582 there is disclosed apparatus for separating quarried material but such quarried material contains only a very small percentage of soil.

However, some waste materials have thus far proved impossible or uneconomic to recycle. In particular, inert waste removed from construction sites, such as clay or subsoil interspersed with stones and possibly intermixed with demolition material and rubble or oversite, has been impossible to re-use. Such waste is, therefore, suitable only for landfill, because of its inhomogeneous nature and unfavourable consistency. Disposing of such waste material is therefore a financial cost to the construction industry and to the waste disposal industry.

Such waste materials, however, do consist of a mixture of materials, such as soils, minerals, sands and gravels, which have commercial and economic value.

According to one aspect of this invention there is provided a process for separating economic materials from inert waste comprising the steps of screening inert waste to remove oversize material; passing the screened material to a pre-washing means where said screened material is pre-soaked by water jets, and fines which are smaller than a predetermined mesh size are removed in suspension; passing the pre-soaked material larger than said predetermined mesh size, to a material washer and scrubbing means where the pre-soaked materials are broken down in water and fines are removed in suspension; and recovering required cleaned economic material from the washer means.

Preferably, the water having been used in the pre-washing means, which thereby contains suspended fines, which are smaller than said predetermined mesh size, is passed to reclamation means to recover the fines.

Advantageously, the water having been used in the material washer means, which thereby contains suspended fines, is also passed to reclamation means to recover the fines.

In a preferred embodiment, the reclamation means comprises de-sanding means and settlement means.

Conveniently, the cleaned material is passed to mesh means for grading the cleaned material.

Advantageously, material buoyant in water is segregated and recovered in the reclamation means by gravitation and flotation, and, if necessary, by water jetting.

Where grossly oversized material is included in the input waste material, the process may be preceded by preliminary screening whereby the grossly oversized materials are removed by a vibrating primary scalpel means.

Advantageously, the screening of the inert waste is performed by a vibrating screen means.

Advantageously, the pre-washing means is provided with a live vibrator.

Advantageously, the material washer means is a log washer/scrubber or coarse material washer.

Preferably, water used in at least part of the process is recycled for re-use in the process.

Advantageously, the initial step of screening the inert waste by a vibrating screen removes material with a dimension greater than 80 mm.

Conveniently, the fines which are smaller than said predetermined mesh size have a maximum dimension of 5 mm; the suspended fines from the de-sanding unit have a maximum dimension of 75 micron, and the cleaned material is graded into less than 5mm, 5-20 mm, and 20-80 mm grades.

According to a further aspect of this invention, there is provided an apparatus for separating economic materials from inert waste comprising: screening means for screening inert waste to remove oversize material; pre-washing means for pre-soaking the screened material from the screening means and for removing fines smaller than a predetermined mesh size; material washer and scrubbing means for breaking down, in water, the pre-soaked materials which are larger than said predetermined mesh size and for removing fines in suspension; and means for recovering the required cleaned material from the material washer means.

Advantageously, reclamation means is provided to recover fines from the water used in pre-soaking in the pre-washing means.

Preferably, reclamation means is also provided to recover fines from the water used in the material washer means.

Preferably, the reclamation means includes de-sanding means, settlement means and means for recovering settled fines.

Advantageously, at least one mesh means is provided for grading the cleaned material.

Preferably, flotation and water jets means are provided in the reclamation means for segregating and recovering material buoyant in water.

Advantageously, the screening means is a vibrating screen means.

Advantageously, the pre-washing means is provided with a live vibrator.

Advantageously, the material washer means is a log washer/scrubber or coarse material washer.

Where grossly oversize materials are present in the waste material, a vibrating primary scalpel means may be provided to remove such grossly oversize materials prior to screening.

The invention will now be described by way of example, with reference to the accompanying drawing in which:

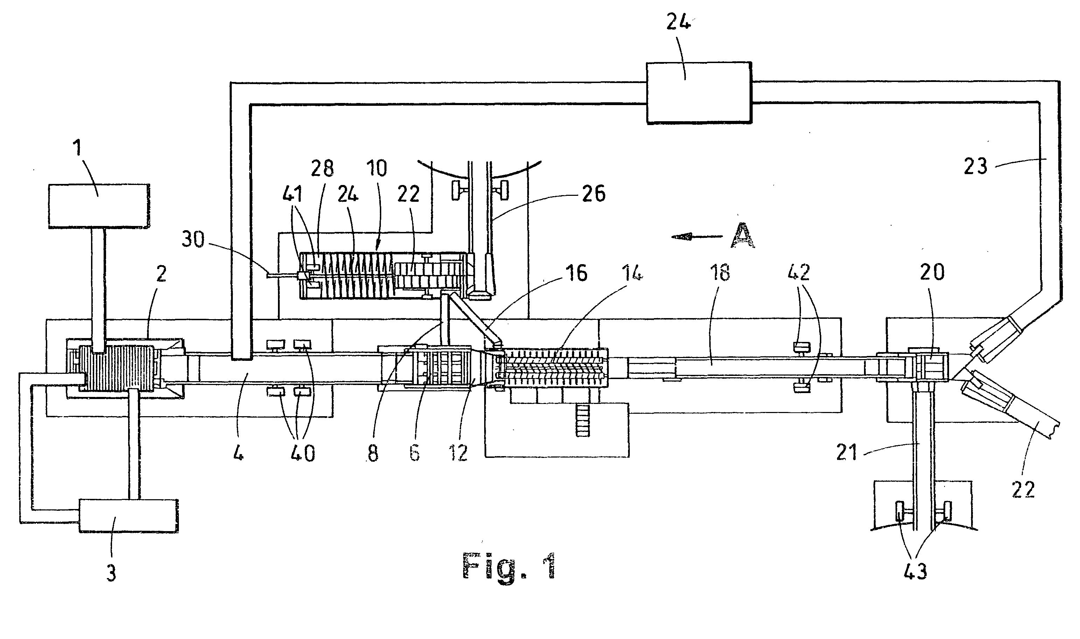

Figure 1 is a plan view of the apparatus in accordance with this invention,

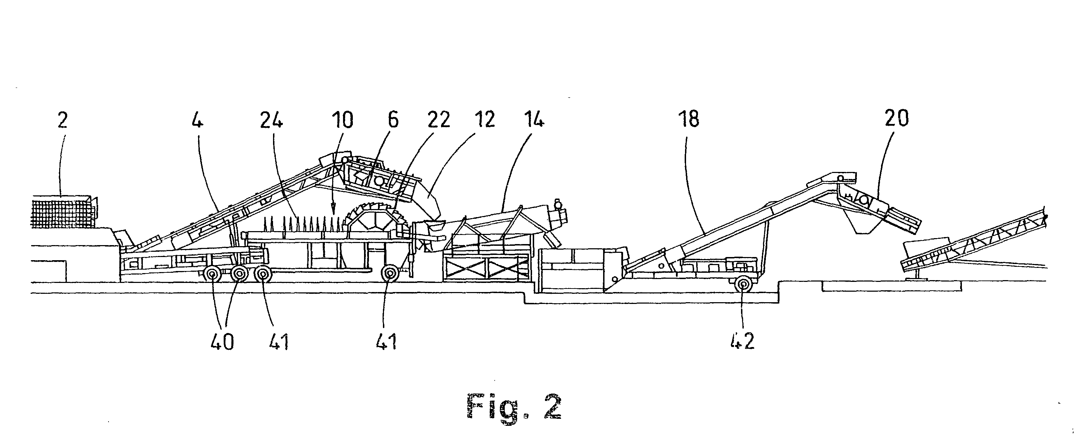

Figure 2 is a side view of the apparatus shown in Figure 1,

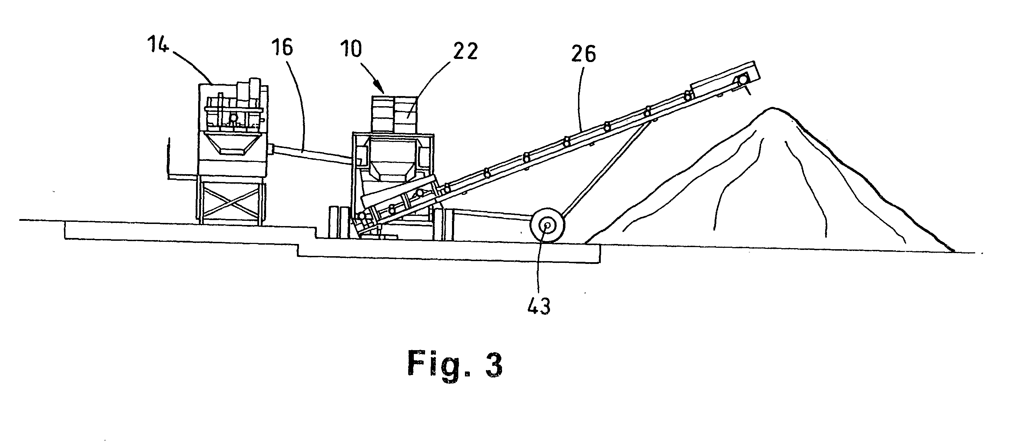

Figure 3 is a side view, in the direction of arrow-headed line A, of the apparatus shown in Figure 1.

In the Figures, like reference numerals denote like parts.

The apparatus for separating economic materials from inert waste shown in the Figures has a live vibrating grizzly vibrating screen 2 for receiving the waste material. Such waste material may be, for example, any mixture of those uncontaminated solid wastes classified as Category 1 Wastes by the UK Environment Agency, such as subsoil, topsoil, clay, sand, stone, brickwork, concrete, road planings, pottery or china. Before screening by the vibrating screen, gross contaminates such as tree trunks, plastic piping, rocks and blocks of concrete are removed by a vibrating primary scalpel 1 and recycled or disposed of by known means, or crushed and re-introduced to the apparatus.

The vibrating screen 2 removes all material which has a dimension in excess of, for example, 80 mm from further processing, and such material in excess of 80mm is also disposed of or recycled by, for example, a crusher 3 and re-introduced to the screen 2.

Screened material below 80mm from the vibrating screen 2 is passed by a conveyor 4 to a pre-washing deck 6, having a sieve vibrated by an out of balance weight, where the material is pre-soaked by water jets to wet and wash the screened material. In this step, fines of a predetermined size, say below 5 mm, are washed from the solid materials. These fines are passed in suspension in the washing water, along a water channel 8, to a de-sanding unit 10 and the solid materials of, for example, 5 mm to 80 mm are conveyed by a chute 12 or other means to a log washer 14.

The solids passed to the log washer 14 are aggressively scrubbed and agitated by the log washer 14 to break down remaining clay particles. Clay particles and other fines, for example, up to 2 mm are then "boiled off" by the agitation, over a weir, and passed in suspension along a second water channel 16 to the de-sanding unit 10.

The remaining cleaned solids, between, say, 5 mm and 80 mm, are then passed along a dry screen 18 from the log washer 14 to a series of meshes 20 to grade and store the material in sizes of, for example, fines less than 5mm along conveyor 21 (these fines being produced by the agression of the log washer 14 or degradation by impact of stone against stone on the screen) , 5mm to 20mm along conveyor 22 and 20mm to 80mm along conveyor 23. If necessary, a rinsing deck (not shown) may be provided before the meshes.

Output from conveyor 23 is fed to a cone crusher 24 where the material is broken down and fed back to the input of the pre-washing deck 6.

The de-sanding unit 10 comprises a water wheel 22 and an Archimedes screw 24 which separate solids having a diameter greater than, say, 75 microns from the water. These solids are passed by a further conveyor 26 to a store. In addition, a flotation tank and surface water jets 28 may be provided to skim off buoyant materials such as paper, polystyrene and other plastics and these are recovered and recycled in a known manner.

Water, containing fines of diameter less than, say, 75 microns, is passed from the de-sanding unit by a water channel 30 to a settlement area (not shown) where the fines are allowed to settle, the water drained and the fines dug out for sale and re-use.

Facilities may also be provided to recover washing water used in any part of the process for re-use in the process.

It is to be understood that the screen sizes used are alterable depending upon the waste material being recovered and the apparatus may be mobile, being mounted on wheels 40 - 43 for movement about a site or to different sites.

## Claims

1. A process for separating economic materials from inert waste comprising the steps of screening (2) inert waste to remove oversize material; passing the screened material to a pre-washing means (6) where said screened material is pre-soaked by water jets, and fines which are smaller than a predetermined mesh size are removed in suspension; passing the pre-soaked material larger than said predetermined mesh size, to a material washer and scrubbing means (14) where the pre-soaked materials are broken down in water and fines are removed in suspension; and recovering (18 - 23) required cleaned economic material from the material washer means.

2. A process as claimed in claim 1 wherein the water having been used in the pre-washing means (6), which thereby contains suspended fines, which are smaller than said predetermined mesh size, is passed to reclamation means (10) to recover the fines.

3. A process as claimed in claim 1 or 2 wherein the water having been used in the material washer and scrubbing means (14), which thereby contains suspended fines, is also passed to reclamation means (10) to recover the fines.

4. A process as claimed in claim 2 or 3 wherein the reclamation means comprises de-sanding means (10) and settlement means (28).

5. A process as claimed in any preceding claim wherein the cleaned material is passed to mesh means (20) for grading the cleaned material.

6. A process as claimed in claims 2-4 wherein material buoyant in water is segregated and recovered in the reclamation means (10) by gravitation and flotation, and, if necessary, by water jetting.

7. A process as claimed in any preceding claim wherein where grossly oversized material is included in the input waste material, the process is preceded by preliminary screening (2) whereby the grossly oversized materials are removed by a vibrating primary scalpel means (1).

8. A process as claimed in claim 7 wherein the screening of the inert waste is performed by a vibrating screen means (2).

9. A process as claimed in any preceding claim wherein the pre-washing means (6) is provided with a live vibrator.

10. A process as claimed in any preceding claim wherein the material washer and scrubbing means (14) is a log washer/scrubber or coarse material washer.

11. A process as claimed in any preceding claim wherein water used in at least part of the process is recycled for re-use in the process.

12. A process as claimed in claim 8 wherein the initial step of screening the inert waste by vibrating screen means (2) removes material with a dimension greater than 80mm.

13. A process as claimed in claim 4 wherein the fines which are smaller than said predetermined mesh size have a maximum dimension of 5 mm; the suspended fines from the de-sanding means (10) have a maximum dimension of 75 micron, and the cleaned material is graded into less than 5mm, 5-20 mm, and 20-80 mm grades.

14. An apparatus for separating economic materials from inert waste comprising: screening means (2) for screening inert waste to remove oversize material; pre-washing means (6) for pre-soaking the screened material from the screening means and for removing fines smaller than a predetermined mesh size; material washer and scrubbing means (14) for breaking down, in water, the pre-soaked materials which are larger than said predetermined mesh size and for removing fines in suspension; and means (18 - 23) for recovering the required cleaned material from the material washer means.

15. An apparatus as claimed in claim 14 wherein reclamation means (10) is provided to recover fines from the water used in pre-soaking in the pre-washing means (6).

16. An apparatus as claimed in claim 15 wherein reclamation means is also provided to recover fines from the water used in the material washer means.

17. An apparatus as claimed in claim 15 or 16 wherein the reclamation means (10) includes de-sanding means, settlement means and means for recovering settled fines.

18. An apparatus as claimed in claims 15-17 wherein at least one mesh means (20) is provided for grading the cleaned material.

19. An apparatus as claimed in claims 15-18 wherein flotation and water jets means (28) are provided in the reclamation means for segregating and recovering material buoyant in water.

20. An apparatus as claimed in claims 14-19 wherein the screening means (2) is a vibrating screen means.

21. An apparatus as claimed in claims 14-20 wherein the pre-washing means is provided with a live vibrator.

22. An apparatus as claimed in claims 14-21 wherein the material washer and scrubbing means (14) is a log washer/scrubber or coarse material washer.

23. An apparatus as claimed in claims 14-22 wherein a vibrating primary scalpel (1) means is provided to remove oversize materials prior to screening.

## Patentansprüche

1. Verfahren zum Trennen von Wertstoffen aus inertem Abfall, welches die folgenden Schritte umfasst: Sieben (2) des inerten Abfalls, um Material in Übergröße zu entfernen; Weiterleiten des gesiebten Materials an eine Vorwaschvorrichtung (6), in der das gesiebte Material mittels Wasserstrahlen vorgeweicht wird und Feingut, das kleiner als die vorbestimmte Maschengröße ist, in Suspension entfernt wird; Weiterleiten des vorgeweichten Materials, der größer als die vorbestimmte Maschengröße ist, an eine Materialwasch- und Reinigungsvorrichtung (14), in der das vorgeweichte Material im Wasser zerlegt und das Feingut in Suspension entfernt wird; und Wiedergewinnung (18-23) des geforderten gereinigten Materials aus der Materialwaschvorrichtung.

2. Verfahren wie in Anspruch 1 beansprucht, wobei das Wasser, das in der Vorwaschvorrichtung (6) verwendet wurde, und dadurch suspendiertes Feingut enthält, das kleiner als die vorbestimmten Maschengröße ist, an eine Aufbereitungsvorrichtung (10) weitergeleitet wird, um das Feingut wiederzugewinnen.

3. Verfahren wie in den Ansprüchen 1 oder 2 beansprucht, wobei das Wasser, das in der Materialwasch- und Reinigungsvorrichtung (14) verwendet wurde, und dadurch suspendiertes Feingut enthält, ebenfalls an eine Aufbereitungsvorrichtung (10) weitergeleitet wird, um das Feingut wiederzugewinnen.

4. Verfahren wie in den Ansprüchen 2 oder 3 beansprucht, wobei die Aufbereitungsvorrichtung (10) eine Entsandungsvorrichtung (10) und eine Sinkvorrichtung (28) umfasst.

5. Verfahren wie in einem der vorherigen Ansprüche beansprucht, wobei das gereinigte Material an eine Siebvorrichtung (20) weitergeleitet wird, um das gereinigte Material nach Korngröße zu sortieren.

6. Verfahren wie in den Ansprüchen 2 bis 4 beansprucht, wobei das in Wasser schwimmende Material in der Aufbereitungsvorrichtung (10) durch Gravitation und Flotation, und sofern notwendig, durch Wasserbestrahlung abgeschieden und aufbereitet wird.

7. Verfahren wie in einem der vorherigen Ansprüche beansprucht, wobei beim Vorhandensein von äußerst übergroßem Material in dem zugeführten Abfall, dem Vorgang ein Vorsieben (2) vorangeht, wobei das äußerst übergroße Material durch eine schwingende primäre Skalpellvorrichtung (1) entfernt wird.

8. Verfahren wie in Anspruch 7 beansprucht, wobei das Sieben des inerten Abfalls durch eine schwingende Siebvorrichtung (2) erfolgt.

9. Verfahren wie in einem der vorherigen Ansprüche beansprucht, wobei die Vorwascheinrichtung (6) mit einem spannungsführenden Vibrator bereitgestellt wird.

10. Verfahren wie in einem der vorherigen Ansprüche beansprucht, wobei es sich bei der Materialwasch- und Reinigungsvorrichtung (14) um einen Schwertwäscher/ -reiniger oder einen Wäscher für Grobgut handelt.

11. Verfahren wie in einem der vorherigen Ansprüche beansprucht, wobei das Wasser, das zumindest teilweise in dem Verfahren verwendet wird, für die erneute Verwendung in dem Verfahren wieder aufbereitet wird.

12. Verfahren wie in Anspruch 8 beansprucht, wobei beim Anfangsschritt des Siebens des inerten Abfalls durch die schwingende Siebvorrichtung (2) Material entfernt wird, dessen Abmessung 80 mm übersteigt.

13. Verfahren wie in Anspruch 4 beansprucht, wobei das Feingut, das kleiner als die vorbestimmte Maschengröße ist, eine maximale Abmessung von 5 mm aufweist; das suspendierte Feingut aus der Entsandungsvorrichtung (10) eine maximale Abmessung von 75 Mikron aufweist, und das gereinigte Material nach Korngrößen von kleiner als 5 mm, 5 - 20 mm und 20 - 80 sortiert wird.

14. Vorrichtung zum Trennen von Wertstoffen aus inertem Abfall, umfassend: eine Siebvorrichtung (2) zum Sieben von inertem Abfall zum Entfernen von Material in Übergröße; Vorwascheinrichtung (6) zum Voreinweichen des gesiebten Materials aus der Siebvorrichtung und zum Entfernen von Feingut, das kleiner als eine vorbestimmte Maschengröße ist; Materialwasch- und Reinigungsvorrichtung (14) zum Zerlegen des voreingeweichten Materials in Wasser, das größer als die vorbestimmte Maschengröße ist, und zum Entfernen von Feingut in Suspension; und eine Vorrichtung (18 - 23) zur Wiedergewinnung des geforderten gereinigten Materials aus der Materialwaschvorrichtung.

15. Vorrichtung wie in Anspruch 14 beansprucht, wobei die Aufbereitungsvorrichtung (10) bereitgestellt wird, um Feingut aus dem Wasser aufzubereiten, das zur Voreinweichung in der Vorwascheinrichtung (6) verwendet wurde.

16. Vorrichtung wie in Anspruch 15 beansprucht, wobei die Aufbereitungsvorrichtung ebenfalls bereitgestellt wird, um Feingut aus dem Wasser aufzubereiten, das in der Materialwaschvorrichtung verwendet wurde.

17. Vorrichtung wie in Anspruch 15 oder 16 beansprucht, wobei die Aufbereitungsvorrichtung (10) eine Entsandungsvorrichtung, eine Sinkvorrichtung und eine Vorrichtung zur Wiedergewinnung des gesunkenen Feinguts enthält.

18. Vorrichtung wie in den Ansprüchen 15 bis 17 beansprucht, wobei mindestens eine Siebvorrichtung (20) bereitgestellt wird, um das gereinigte Material nach Korngröße zu sortieren.

19. Vorrichtung wie in den Ansprüchen 15 bis 18 beansprucht, wobei Flotations- und Wasserstrahlvorrichtungen (28) in der Aufbereitungsanlage bereitgestellt werden zum Zweck der Abscheidung und Wiedergewinnung des im Wasser schwimmenden Materials.

20. Vorrichtung wie in den Ansprüchen 14 bis 19 beansprucht, wobei die Siebvorrichtung (2) eine schwingende Siebvorrichtung ist.

21. Vorrichtung wie in den Ansprüchen 14 bis 20 beansprucht, wobei die Vorwaschvorrichtung einen spannungsführenden Vibrator umfasst.

22. Vorrichtung wie in den Ansprüchen 14 bis 21 beansprucht, wobei es sich bei der Wertstoffwasch- und Reinigungsvorrichtung (14)) um einen Schwertwäscher/ -reiniger oder um einen Wäscher für Grobgut handelt.

23. Vorrichtung wie in den Ansprüchen 14 bis 22 beansprucht, wobei eine schwingende primäre Skalpellvorrichtung (1) bereitgestellt wird, um Material in Übergröße vor dem Sieben zu entfernen.

## Revendications

1. Procédé permettant de séparer les matières à recyclage rentable des déchets inertes comprenant les étapes consistant à cribler (2) les déchets inertes pour enlever la matière trop grosse, à amener la matière criblée vers un moyen de prélavage (6) où ladite matière criblée est préalablement trempée par des jets d'eau, et les fines qui sont plus petites qu'une taille de maille prédéterminée sont enlevées en suspension, à amener la matière préalablement trempée plus grande qu'une taille de maille prédéterminée vers un moyen de lavage et de nettoyage (14) de la matière où les matières préalablement trempées sont désagrégées dans l'eau et les fines sont enlevées en suspension, et à récupérer (18 - 23) la matière recyclée requise du moyen de lavage de la matière.

2. Procédé comme revendiqué dans la revendication 1, dans lequel l'eau ayant été utilisée dans le moyen de prélavage (6), qui de ce fait contient des fines en suspension qui sont plus petites que ladite taille de maille prédéterminée, est également amenée vers un moyen de récupération (10) pour récupérer les fines.

3. Procédé comme revendiqué dans la revendication 1 ou 2, dans lequel l'eau ayant été utilisée dans le moyen de lavage et de nettoyage (14) de la matière, qui de ce fait contient des fines en suspension qui sont plus petites que ladite taille de maille prédéterminée, est amenée vers un moyen de récupération (10) pour récupérer les fines.

4. Procédé comme revendiqué dans la revendication 2 ou 3, dans lequel le moyen de récupération comprend un moyen de dessablage (10) et un moyen de décantation (28).

5. Procédé comme revendiqué dans une quelconque des revendications précédentes, dans lequel la matière nettoyée est amenée vers des moyens à mailles (20) pour calibrer la matière nettoyée.

6. Procédé comme revendiqué dans les revendications 2 - 4, dans lequel la matière flottant dans l'eau est séparée et récupérée dans le moyen de récupération (10) par gravité et flottage, et, si nécessaire, par injection d'eau.

7. Procédé comme revendiqué dans une quelconque des revendications précédentes, dans lequel si la matière grossièrement surdimensionnée est incluse dans les déchets introduits, le procédé est précédé par un criblage (2) préliminaire, la matière grossièrement surdimensionnée étant enlevée par un premier moyen à scalpeur vibrant (1).

8. Procédé comme revendiqué dans la revendication 7, dans lequel le criblage des déchets inertes est effectué à l'aide d'un moyen à crible vibrant (2).

9. Procédé comme revendiqué dans une quelconque des revendications précédentes, dans lequel le moyen de prélavage (6) est pourvu d'un excitateur de vibrations commandé.

10. Procédé comme revendiqué dans une quelconque des revendications précédentes, dans lequel le moyen de lavage et de brossage (14) de la matière est un laveur/nettoyeur désintégrateur ou un laveur de matière grossière.

11. Procédé comme revendiqué dans une quelconque des revendications précédentes, dans lequel l'eau utilisée dans au moins une partie du procédé est recyclée pour être réutilisée dans le procédé.

12. Procédé comme revendiqué dans la revendication 8, dans lequel l'étape initiale consistant à cribler les déchets inertes à l'aide d'un moyen à crible vibrant (2) enlève la matière ayant une dimension supérieure à 80 mm.

13. Procédé comme revendiqué dans la revendication 4, dans lequel les fines qui sont plus petites que ladite taille de maille prédéterminée ont une dimension maximale de 5 mm, les fines en suspension provenant du moyen de dessablage (10) ont une dimension maximale de 75 microns et la matière nettoyée est calibrée en classes de moins de 5 mm, 5 - 20 mm et 20 - 80 mm.

14. Appareil permettant de séparer les matières à recyclage rentable des déchets inertes comprenant: un moyen de criblage (2) pour cribler les déchets inertes pour enlever la matière trop grosse, un moyen de prélavage (6) pour préalablement tremper la matière criblée provenant du moyen de criblage et pour enlever les fines qui sont plus petites qu'une taille de maille prédéterminée, un moyen de lavage et de nettoyage (14) pour désagréger, dans l'eau, les matières préalablement trempées qui sont plus grandes que ladite taille de maille prédéterminée et pour enlever les fines en suspension, et un moyen (18-23) pour récupérer la matière nettoyée requise du moyen de lavage de la matière.

15. Appareil comme revendiqué dans la revendication 14, dans lequel le moyen de récupération (10) est prévu pour récupérer les fines de l'eau utilisée pour le trempage préalable dans le moyen de prélavage (6).

16. Appareil comme revendiqué dans la revendication 15, dans lequel le moyen de récupération est également prévu pour récupérer les fines de l'eau utilisée dans le moyen de lavage de la matière.

17. Appareil comme revendiqué dans la revendication 15 ou 16, dans lequel le moyen de récupération (10) comprend un moyen de dessablage, un moyen de décantation et un moyen pour récupérer les fines qui se sont déposées.

18. Appareil comme revendiqué dans les revendications 15-17, dans lequel au moins un moyen à mailles (20) est prévu pour calibrer la matière nettoyée.

19. Appareil comme revendiqué dans les revendications 15 - 18, dans lequel des moyens de flottage et de jets d'eau (28) sont prévus dans le moyen de récupération pour séparer et récupérer la matière flottant dans l'eau.

20. Appareil comme revendiqué dans les revendications 14 - 19, dans lequel le moyen de criblage (2) est un moyen à crible vibrant.

21. Appareil comme revendiqué dans les revendications 14 - 20, dans lequel le moyen de prélavage est pourvu d'un excitateurs de vibrations commandé.

22. Appareil comme revendiqué dans les revendications 14 - 21, dans lequel le moyen de lavage et de nettoyage (14) de la matière est un laveur / nettoyeur désintégrateur ou un laveur de matière grossière.

23. Appareil comme revendiqué dans les revendications 14 - 22, dans lequel un premier moyen à scalpeur vibrant (1) est prévu pour enlever les matières trop grosses avant le criblage.
